# FASCICULE DE BREVET EUROPEEN

(11) **EP 2 026 007 B1**
(45) Date de publication et mention de la délivrance du brevet: **16.03.2016**
(21) Numéro de dépôt: 08161073.5
(22) Date de dépôt: 24.07.2008
(51) Int. Cl.: F23R 3/28

(54) **Injecteur de carburant dans une chambre de combustion de turbomachine**
Kraftstoffeinspritzer in eine Brennkammer einer Strömungsmaschine
Fuel injector in a turbomachine combustion chamber

(30) Priorité: 30.07.2007 FR 0756795
(43) Date de publication de la demande: 18.02.2009
(73) Titulaire: SNECMA, 75015 Paris (FR)
(72) Inventeur: Cazalens, Michel, 77780 Bourron Marlotte (FR); Noël, Thomas, 94300 Vincennes (FR)
(74) Mandataire: Intès, Didier Gérard André

(56) Documents cités:
- EP-A- 1 225 392
- EP-A- 1 512 913
- US-A- 5 628 180
- US-A- 5 640 841

## Description

L'invention concerne un injecteur de carburant dans une chambre de combustion de turbomachine. L'invention se destine à tout type de turbomachine, terrestre ou aéronautique, et plus particulièrement aux turboréacteurs d'avions.

Une chambre de combustion de turbomachine est généralement de forme annulaire, centrée sur un axe X correspondant à l'axe de rotation du rotor de la turbomachine. Elle comprend deux parois annulaires (ou viroles) coaxiales d'axe X, et un fond de chambre disposé entre lesdites parois, dans la région amont de ladite chambre. Lesdites parois et le fond de chambre délimitent l'enceinte de combustion de la chambre.

Une pluralité de systèmes d'injection de carburant sont fixés sur le fond de chambre (à l'intérieur d'orifices prévus à cet effet dans le fond de chambre) et répartis régulièrement autour de l'axe X. Un injecteur de carburant est raccordé à chaque système d'injection.

Des exemples connus de systèmes d'injection et d'injecteurs sont divulgués dans les documents US 5628180, EP 1512913A1 et EP 1225 392A2.

Un système d'injection comprend généralement un trou central destiné à recevoir l'extrémité libre d'un injecteur de carburant, et plusieurs passages d'admission d'air disposés concentriquement autour dudit trou central. Ces passages d'admission d'air sont généralement des vrilles d'air, c'est-à-dire des passages annulaires à l'intérieur desquels s'étendent une série d'aubes permettant d'imprimer un mouvement de rotation à l'air qui les traverse. L'air traversant ces passages d'admission provient du diffuseur de la turbomachine situé en amont de la chambre de combustion. Cet air est mélangé au carburant apporté par ledit injecteur pour former un mélange air/carburant qui est brûlé dans la chambre de combustion.

L'injecteur est une pièce traversant le "module chambre de combustion" de la turbomachine, depuis le carter extérieur de ce module jusqu'à la paroi de fond de chambre. Un injecteur comprend la ou les conduites (ou rampes) d'alimentation en carburant, à l'intérieur desquelles le carburant est transporté pour être injecté dans la chambre. Le carburant est projeté au niveau de l'extrémité libre, ou nez, de l'injecteur.

L'invention concerne un injecteur de carburant et non le système d'injection auquel cet injecteur est raccordé.

Le processus classique de conception et d'optimisation d'une chambre de combustion d'un turboréacteur d'avion a pour objectif de concilier l'atteinte des performances opérationnelles (typiquement : rendement de combustion, domaine de stabilité, domaine d'allumage et de rallumage, durée de vie du foyer, distribution des températures en sortie de foyer) découlant de la mission envisagée pour l'avion, avec la réduction des émissions polluantes (NOx, CO, UHC, suies).

Une solution connue pour réduire les émissions polluantes, notamment celles d'oxydes d'azote (de type NOx), est de faire en sorte que la flamme de combustion soit en présence d'un mélange air/carburant riche ou pauvre en carburant. Par exemple, l'appauvrissement en carburant du mélange air/carburant de la flamme de combustion peut être obtenu en augmentant le débit d'air affecté à la combustion (principalement le débit de fond de chambre).

L'expérience a montré que cette solution basée sur l'appauvrissement est efficace pour réduire les NOx. Toutefois, lorsqu'on cherche à pousser cette solution au maximum de son potentiel en terme de réduction des émissions polluantes (pour un foyer à géométrie fixe et donc à répartition d'air constante), elle présente les inconvénients suivants: la stabilité de la flamme de combustion est affectée (i.e. la vulnérabilité de cette flamme à l'extinction est augmentée), en particulier aux bas régimes de fonctionnement du turboréacteur, de sorte que les phases de ralentis du moteur ne peuvent plus être obtenues; le rendement de combustion aux régimes de fonctionnement intermédiaires est diminué; l'allumage de la flamme, lorsque l'avion est au sol, est plus difficile; et le rallumage de cette flamme, lorsque l'avion est en altitude, est également plus difficile.

L'invention a pour but de surmonter les inconvénients précités.

Pour atteindre ce but, l'invention a pour objet un injecteur de carburant dans une chambre de combustion de turbomachine, présentant un nez d'injecteur destiné à être raccordé à un système d'injection fixé au fond de ladite chambre, ce nez d'injecteur comprenant:
- un premier canal pour l'écoulement d'un pré-mélange air/carburant vers la chambre de combustion, ce premier canal débouchant au centre du nez d'injecteur via une ouverture de sortie du pré-mélange air/carburant;
- un isolant électrique entourant ladite ouverture de sortie du pré-mélange air/carburant
- un système de génération de plasma disposé en aval de ladite ouverture de sortie du pré-mélange air/carburant, afin de contrôler l'allumage et la combustion de ce pré-mélange air/carburant;
- un deuxième canal pour l'écoulement d'un carburant vers la chambre de combustion, ce deuxième canal débouchant à l'extérieur dudit isolant électrique; et
- un troisième canal pour l'écoulement d'un carburant vers la chambre de combustion, ce troisième canal débouchant à l'extérieur du deuxième canal.

L'idée à la base de l'invention consiste donc à intégrer à un injecteur de carburant un circuit complémentaire générant un pré-mélange air/carburant plus ou moins riche, et à contrôler l'allumage et la combustion de ce pré-mélange air/carburant au moyen d'un système de génération de plasma.

On notera que pour désigner le mélange air/carburant s'écoulant dans le premier canal, on préfère parler de pré-mélange afin de bien distinguer ce pré-mélange air/carburant du mélange air/carburant brûlé dans la chambre de combustion et réalisé en mélangeant le carburant sortant du deuxième canal et l'air traversant les passages d'admission du système d'injection. On notera, en outre, que seule une petite fraction de la quantité total de carburant injecté est généralement affectée à la réalisation du pré-mélange.

En contrôlant l'allumage et la combustion du pré-mélange air/carburant au moyen d'un système de génération de plasma on assure la stabilité de la combustion pour tous les régimes moteurs, indépendamment de la richesse du mélange air/carburant de la flamme de combustion, et on contribue à l'amélioration du rendement de combustion, en particulier aux régimes de fonctionnement intermédiaires du turboréacteur. Ceci permet de réduire les émissions de CO et d'imbrûlés (UHC).

Un autre avantage de l'invention est de diminuer la vulnérabilité de la flamme de combustion à l'ingestion d'eau ou de glace.

Enfin, l'intégration de la fonction d'allumage à l'injecteur permet de supprimer le système d'allumage par bougie couramment utilisé dans les systèmes d'injection conventionnels et disposé en aval de l'injecteur et, par là même, les problèmes associés à l'implantation de ce système d'allumage par bougie (notamment les problèmes d'étanchéité, de dilatation, et de sillage aérodynamique généré derrière un tel système et venant perturber l'écoulement en aval).

Ledit isolant électrique a pour fonction de créer, au sein de l'injecteur, deux zones à des potentiels électriques différents, l'injecteur étant majoritairement réalisé dans des matériaux métalliques et donc conducteurs électriques. Il devient alors possible de créer, entre ces deux zones, une décharge électrique pour produire le plasma.

Selon un mode de réalisation, le système de génération de plasma comprend : une première électrode fixée sur ledit isolant électrique, sans contact avec le reste de l'injecteur ; un fil électrique cheminant à l'intérieur dudit isolant et connecté à la première électrode; et une deuxième électrode en contact avec une partie de l'injecteur réalisée en un matériau conducteur d'électricité.

Selon une configuration possible, le fil électrique amène une haute tension à la première électrode, et la partie de l'injecteur en contact avec la deuxième électrode fait office de masse. Bien entendu, d'autres configurations peuvent être envisagées.

Selon un mode de réalisation, ledit deuxième canal présente une ouverture de sortie de carburant ayant une forme générale circulaire. Notamment, cette ouverture de sortie peut être une fente d'injection, ou être formée par plusieurs orifices d'injection disposés en cercle.

Selon un mode de réalisation un passage est ménagé entre le premier canal et le deuxième canal, de sorte que le carburant du deuxième canal est utilisé pour réaliser le pré-mélange air/carburant du premier canal. Il n'y a ainsi pas de circuit de carburant spécialement dédié à la réalisation du pré-mélange air/carburant, ce qui simplifie la structure du nez de l'injecteur et diminue sa taille.

L'invention et ses avantages seront mieux compris à la lecture de la description détaillée qui suit, faite à titre illustratif et non limitatif. Cette description fait référence aux figures annexées sur lesquelles:
- la figure 1 représente un exemple de chambre de combustion en demi-coupe axiale suivant l'axe de rotation X du rotor du turboréacteur;
- la figure 2 représente un exemple d'injecteur selon l'invention, en coupe axiale suivant l'axe d'injection I du pré-mélange air/carburant;
- la figure 3 représente l'injecteur de la figure 2 raccordé à un exemple de système d'injection;
- la figure 4 représente un autre exemple d'injecteur selon l'invention, en coupe axiale suivant l'axe d'injection I du pré-mélange air/carburant; et
- la figure 5 représente l'injecteur de la figure 4 raccordé à un autre exemple de système d'injection.

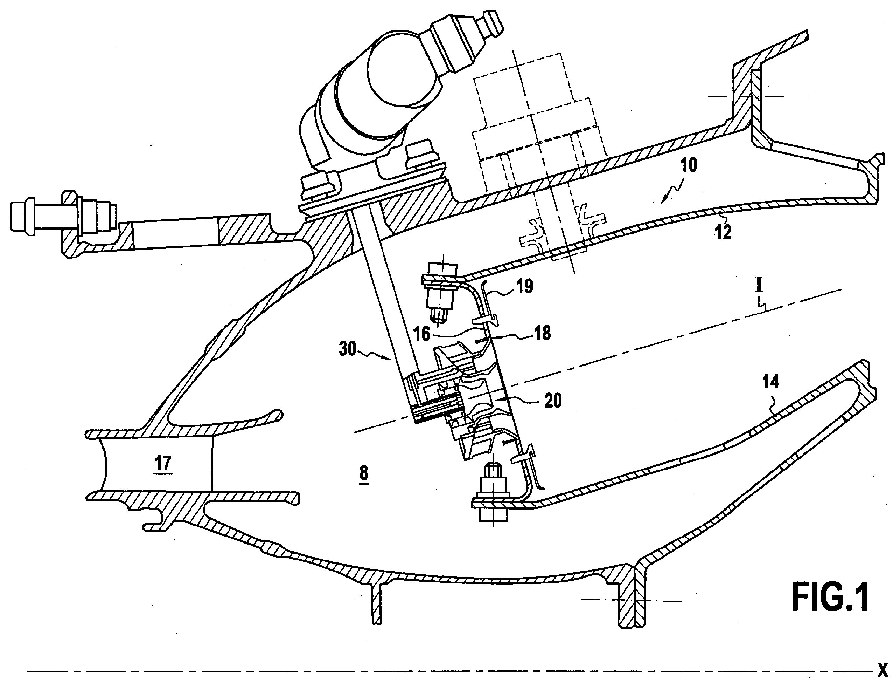

L'exemple de chambre de combustion 10 de la figure 1 est représenté dans son environnement, à l'intérieur d'un turboréacteur. Cette chambre 10 est annulaire, centrée sur l'axe X de rotation du rotor du turboréacteur. Cette chambre de combustion est dite axiale, car elle est plutôt orientée suivant l'axe X.

L'invention pourrait s'appliquer à d'autres types de turbomachines et à d'autres types de chambres, notamment aux chambres de combustion dites radiales à retour, c'est-à-dire des chambres de combustion coudées dont une portion est orientée plutôt radialement par rapport à l'axe X.

On appelle généralement "module chambre de combustion" 8 le logement recevant la chambre de combustion 10. Le module chambre de combustion 8 est alimenté en air comprimé par le diffuseur 17 du turboréacteur.

La chambre de combustion 10 comprend deux parois annulaires (ou viroles) internes 12 et externes 14. Ces parois 12, 14 sont mutuellement écartées et positionnées coaxialement autour de l'axe X. Ces parois 12, 14 sont reliées entre elles par un fond de chambre 16 disposé entre celles-ci, dans la région amont de la chambre 10. Les parois 12, 14 et le fond 16 délimitent entre eux, l'enceinte de combustion de la chambre 10.

Le fond de chambre 16 présente une pluralité d'ouvertures 18 réparties régulièrement autour de l'axe de rotation X. La chambre 10 comprend également des déflecteurs 19 montés sur le fond de chambre 16, à la périphérie des ouvertures 18, de manière à protéger le fond 16 des hautes températures atteintes lors de la combustion.

A l'intérieur de chaque ouverture 18 est monté un système d'injection 20 et à chaque système d'injection 20 est raccordé un injecteur 30.

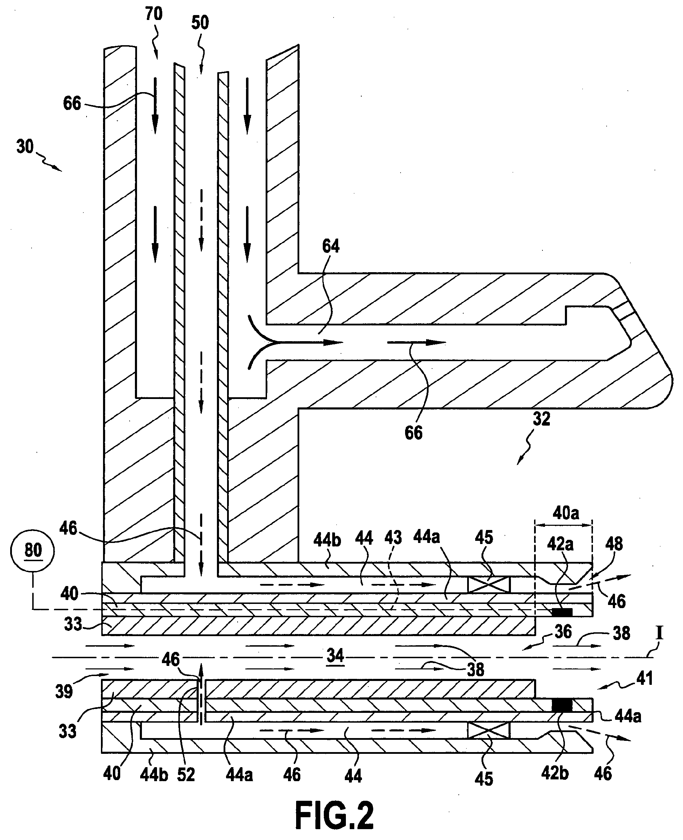

En référence aux figures 1 à 3, on va maintenant décrire un premier exemple d'injecteur 30 selon l'invention.

On appelle "nez d'injecteur" 32 la portion d'extrémité libre de l'injecteur 30 destinées à être raccordées au système d'injection 20. Le nez d'injecteur 32 comprend, en son centre, un premier canal 34 pour l'écoulement d'un pré-mélange air/carburant 38 vers la chambre de combustion. Ce pré-mélange est injecté suivant l'axe d'injection I. Le premier canal 34 débouche au centre du nez d'injecteur via une ouverture de sortie 36.

Le nez d'injecteur 32 comprend, autour du premier canal 34 et dans cet ordre :
- un isolant électrique 40 entourant l'ouverture de sortie 36 du pré-mélange air/carburant 38;
- un système de génération de plasma 41 disposé en aval de ladite ouverture 36, afin de contrôler l'allumage et la combustion du pré-mélange air/carburant 38; et
- un deuxième canal 44 pour l'écoulement d'un carburant 46 vers la chambre de combustion, ce deuxième canal 44 débouchant à l'extérieur dudit isolant électrique, via une fente de sortie 48 circulaire, centrée sur l'axe I.

Tous ces éléments sont rassemblés en un unique ensemble, une unique "tête", se raccordant au système d'injection en un même endroit.

Lorsqu'il est question de l'injecteur 30, l'amont et l'aval sont définis par rapport au sens d'écoulement du pré-mélange 38 ou du carburant 46 (de l'amont vers l'aval). Par ailleurs, la direction axiale correspond à la direction de l'axe d'injection I du pré-mélange, et une direction radiale est une direction perpendiculaire à l'axe I. Enfin, sauf précision contraire, les adjectifs intérieur et extérieur sont utilisés en référence à une direction radiale de sorte que la partie intérieure (i.e. radialement intérieure) d'un élément est plus proche de l'axe I que la partie extérieure (i.e. radialement extérieure) du même élément.

Le premier canal 34, l'isolant électrique 40 et le deuxième canal 44 présentent une sensible symétrie de révolution autour de l'axe I. Le canal 34 est de forme générale tubulaire,. L'isolant 40 et le canal 44 sont de forme générale annulaire, centrée sur l'axe I.

Le premier canal 34 est orienté suivant l'axe I. A son extrémité amont, il présente une ouverture d'entrée d'air 39 par laquelle entre l'air en provenance du diffuseur 17. Cet air est utilisé pour réaliser le pré-mélange air carburant 38.

L'isolant électrique 40 est une enveloppe tubulaire, centrée sur l'axe I, entourant la paroi tubulaire extérieure du premier canal 34, et s'étendant le long de ce premier canal 34, depuis l'ouverture d'entrée d'air 39 jusqu'au-delà de l'ouverture de sortie 36 du pré-mélange 38, de sorte qu'une portion d'isolant électrique 40a dépasse en aval de l'ouverture de sortie 36.

Le système de génération de plasma 41 est constitué d'un réseau d'au moins deux électrodes, dont une électrode haute tension 42a et une électrode basse tension 42b. L'électrode haute tension 42a est fixée sur la portion d'isolant 40a (à l'intérieur de celle-ci), sans contact avec le reste de l'injecteur. Un fil électrique 43 cheminant dans la masse de l'isolant 40 et relié à un générateur de courant alternatif 80, amène la haute tension à l'électrode 42a.

L'électrode basse tension 42b est logée dans une ouverture 49 traversant l'épaisseur de l'isolant 40, de sorte que cette électrode 42b est directement en contact avec la paroi intérieure 44a du deuxième canal 44. Cette paroi 44a est en un matériau conducteur d'électricité et fait office de masse. Les électrodes 42a et 42b sont disposées face à l'axe I et sont diamétralement opposées.

Le générateur de courant alternatif 80 auquel l'électrode haute tension 42a est connectée doit générer une tension dont les paramètres sont optimisés en fonction du régime de fonctionnement du turboréacteur, des espèces chimiques que l'on désire produire (radicaux, espèces excitées), du degré de pré-cassage désiré pour les molécules de carburant, et de la fonction visée : allumage, rallumage en altitude, extension du domaine de stabilité, contrôle actif de foyer. Aussi, ce générateur de courant alternatif 80 présente des caractéristiques particulières. Dans l'exemple, le générateur de courant 80 permet de créer un plasma de type "streamer" (i.e. avec propagation d'un front d'ionisation) et ce générateur de courant 80 a une durée de pulsation inférieure à 50 nanosecondes et une différence de potentiel variable et pilotable. Le temps de montée, la durée de l'impulsion et le taux de répétition sont pilotables de manière à pouvoir s'adapter au régime de fonctionnement.

Le deuxième canal 44 est délimité entre deux parois tubulaires intérieure 44a et extérieure 44b, l'extrémité aval de la paroi extérieure et/ou intérieure ayant un contour interne convergent/divergent (i.e. formant un venturi). Dans l'exemple, il s'agit du contour interne de la paroi extérieure 44b. Cette configuration convergente/divergente permet d'accélérer lé carburant avant de l'injecter dans la chambre. Cette accélération permet de réduire, voire d'éliminer, le sillage des aubes de la vrille 45 (voir ci-dessous) et favorise la pulvérisation du carburant.

Une vrille 45 est présente à l'intérieur du deuxième canal 44, en amont dudit contour interne convergent/divergent. Cette vrille 45 est formée de plusieurs d'aubes s'étendant radialement entre les parois tubulaires intérieure 44a et extérieure 44b, et réparties régulièrement autour de la paroi intérieure 44a. Cette vrille 45 permet d'imprimer un mouvement de rotation au carburant 46 qui traverse le canal 44.

Le deuxième canal 44 est alimenté en carburant par une première conduite (ou rampes) d'alimentation 50. Cette conduite 50 débouche dans la partie amont du canal 44.

En outre, un passage 52 est ménagé entre le premier canal 34 et le deuxième canal 44, de sorte que le carburant 46 du deuxième canal 44 est utilisé pour réaliser le pré-mélange air/carburant 36 du premier canal 34. Plus précisément, le passage 52 traverse la paroi intérieure 44a du deuxième canal 44, l'isolant 40 et la paroi tubulaire 33 du premier canal 34, de manière à déboucher dans la partie amont du canal 34.

Le nez d'injecteur 32 comprend un troisième canal 64 pour l'écoulement d'un carburant 66 vers la chambre de combustion, ce troisième canal 64 débouchant (radialement) à l'extérieur du deuxième canal 44. Ce troisième canal 64 est radialement distant du deuxième canal, de sorte qu'il ne se raccorde pas au système d'injection 20 au même endroit que l'ensemble (la "tête") formé par le premier et le deuxième canal.

Le troisième canal 64 est alimenté en carburant par une deuxième conduite d'alimentation 70. Ce troisième canal 64 se termine par une chambre annulaire 75 centrée sur l'axe I et percée d'orifices 78 régulièrement répartis autour de l'axe I et permettant l'injection du carburant 66 dans la chambre de combustion 10.

Le deuxième canal 44 permet d'injecter un premier nuage de carburant 46 au centre du système d'injection 20. Le troisième canal 64 permet d'injecter, via la chambre annulaire 75 et les orifices 78, un deuxième nuage de carburant 66. Ce deuxième nuage de carburant 66 est de forme générale annulaire, sensiblement centrée sur l'axe I, et il entoure le premier nuage de carburant 46.

Les carburants sortant des canaux 44 et 64 sont mélangés aux écoulements d'air, traversant les passages d'admission d'air (des vrilles d'air) du système d'injection 20.

L'injecteur 30 comprend donc deux circuits de carburant : un circuit "pilote" comprenant le conduit d'alimentation 50 et le deuxième canal 44, dans lesquels s'écoule le carburant 46; et un circuit "décollage" dans lesquels s'écoule le carburant 66.

Grâce au système de génération de plasma 41, on contrôle l'allumage et la combustion du pré-mélange air carburant 36. Comme la combustion se propage au nuage de carburant 46, on contrôle également l'allumage et la combustion du mélange air/carburant du circuit "pilote"

La régulation de la quantité de carburant entre les circuits "pilote" et "décollage", est faite de manière à limiter les émissions de gaz toxiques pour tous les régimes de fonctionnement du turboréacteur.

Lors du démarrage, du redémarrage du turboréacteur (i.e. phases d'allumage et de propagation de la flamme) et durant la phase d'enroulement et aux faibles régimes (i.e. typiquement les régimes ralenti), seul le circuit "pilote" fonctionne. En fonctionnement plein gaz, le circuit "pilote" et le circuit "décollage" sont carburés, la répartition de carburant étant choisie de manière à réaliser une combustion pauvre, donc faiblement productrice de NOx et de fumée pour les deux circuits.

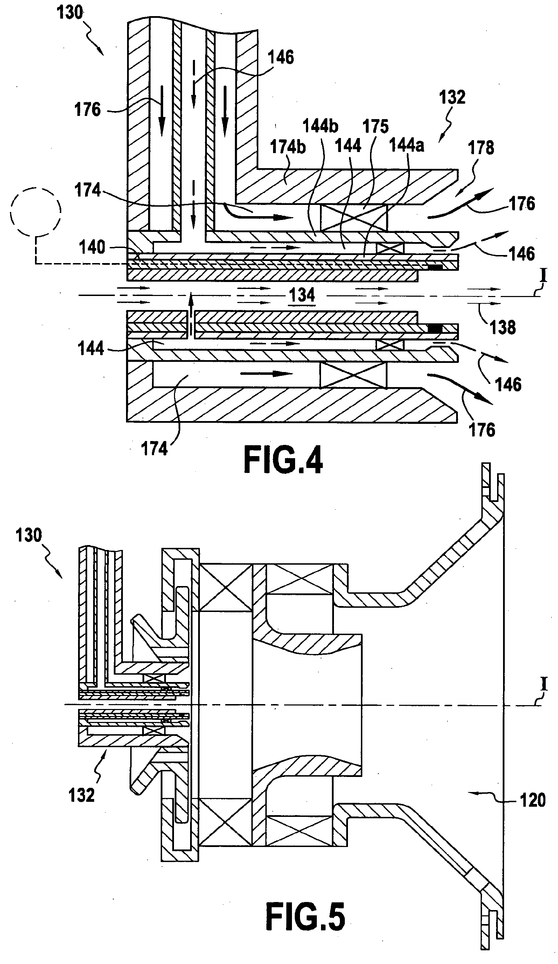

En référence aux figures 4 et 5, on va maintenant décrire un deuxième exemple d'injecteur 130 selon l'invention. Les éléments ou parties de cet injecteur 130 qui sont analogues aux éléments ou parties de l'injecteur 30 des figures 1 à 3, sont repérés par les mêmes références numériques augmentées de 100.

L'injecteur 130 diffère de l'injecteur 30 en ce que le troisième canal se situe juste à l'extérieur du deuxième canal 144. Dans l'exemple, la paroi tubulaire 144b délimitant extérieurement le deuxième canal 144, délimite intérieurement le troisième canal 174. Le troisième canal 174 débouche directement dans la chambre de combustion, à l'extérieur du deuxième canal 144, via une ouverture de sortie de forme générale circulaire 178, et permet ainsi l'écoulement d'un carburant 176 vers cette chambre. Les premier, deuxième et troisième canal, 134, 144 et 174 sont donc réunis dans un même ensemble, un même "tête", qui se raccorde au système d'injection 120 en un même endroit, c'est-à-dire à l'intérieur de l'orifice central de ce système 120.

Le contour interne de la paroi tubulaire 174b qui délimite extérieurement le troisième canal 174, est divergent au niveau de l'extrémité aval de cette paroi. Une vrille 175 est présente à l'intérieur du troisième canal 174, en amont dudit contour divergent.

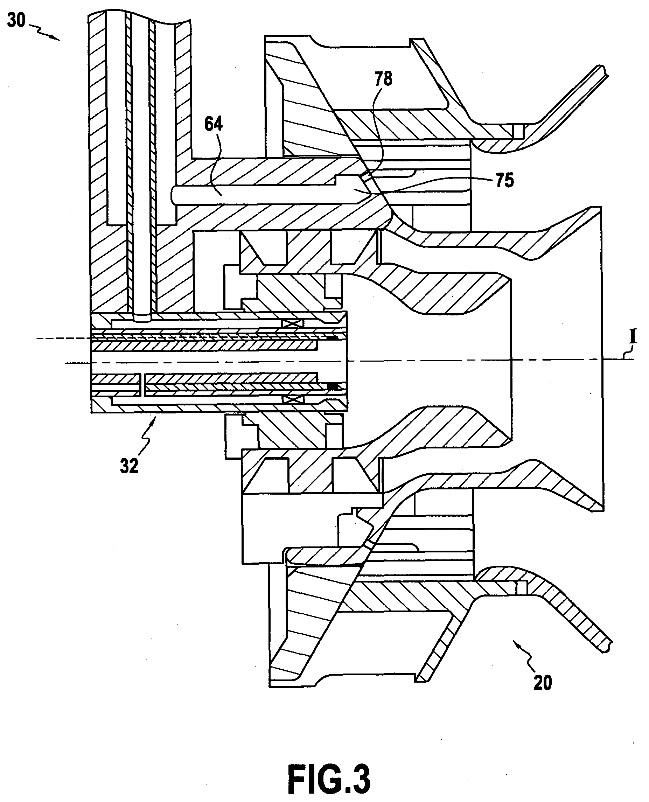

Les injecteurs 130 du type de celui des figures 4 et 5 sont utilisés, de préférence, avec un système d'injection 120 dit "aéro-mécanique", du type de celui représenté sur la figure 5, alors que les injecteurs 30 du type de celui des figures 1 à 3 sont utilisés, de préférence, avec un système d'injection 20 dit "multipoints", du type de celui représenté sur la figure 3.

## Revendications

1. Injecteur de carburant (30, 130) pour chambre de combustion (10) de turbomachine, présentant un nez d'injecteur (32, 132) destiné à être raccordé à un système d'injection (20, 120) fixé au fond (16) de ladite chambre de combustion, **caractérisé en ce qu'**il comprend :
- un premier canal (34, 134) pour l'écoulement d'un pré-mélange air/carburant (38, 138) vers la chambre de combustion, ce premier canal (34, 134) débouchant au centre du nez d'injecteur via une ouverture de sortie (36) du pré-mélange air/carburant (38, 138);
- un isolant électrique (40, 140) entourant ladite ouverture de sortie (36) du pré-mélange air/carburant;
- un système de génération de plasma (41) disposé en aval de ladite ouverture de sortie (36) du pré-mélange air/carburant, afin de contrôler l'allumage et la combustion de ce pré-mélange air/carburant (38);
- un deuxième canal (44, 144) pour l'écoulement d'un carburant (46, 146) vers la chambre de combustion, ce deuxième canal débouchant à l'extérieur dudit isolant électrique (40, 140) ; et
- un troisième canal (64, 174) pour l'écoulement d'un carburant (66, 176) vers la chambre de combustion, ce troisième canal (64, 174) débouchant à l'extérieur du deuxième canal (44, 144).

2. Injecteur de carburant selon la revendication 1, dans lequel un passage (52) est ménagé entre le premier canal (34, 134) et le deuxième canal (44, 144), de sorte que le carburant (46, 146) du deuxième canal (44, 144) est utilisé pour réaliser le pré-mélange air/carburant (38, 138) du premier canal (34, 134).

3. Injecteur de carburant selon la revendication 1 ou 2, dans lequel le système de génération de plasma comprend au moins deux électrodes (42a, 42b), le plasma étant généré par une décharge électrique créée entre ces deux électrodes.

4. Injecteur de carburant selon l'une quelconque des revendications 1 à 3, dans lequel le système de génération de plasma comprend : une première électrode (42a) fixée sur ledit isolant électrique (40), sans contact avec le reste de l'injecteur ; un fil électrique (43) cheminant à l'intérieur dudit isolant (40) et connecté à la première électrode (42a) ; et une deuxième électrode (42b) en contact avec une partie de l'injecteur réalisée en un matériau conducteur d'électricité.

5. Injecteur de carburant selon l'une quelconque des revendications 1 à 4, dans lequel le premier canal (34, 134) est de forme générale tubulaire et présente, à son extrémité amont, une ouverture d'entrée d'air (39) par laquelle entre l'air utilisé pour réaliser le pré-mélange air/carburant (38, 138).

6. Injecteur de carburant selon l'une quelconque des revendications 1 à 5, dans lequel les premier, deuxième et troisième canaux (34, 44, 64; 134, 144, 174) sont réunis en un unique ensemble.

7. Chambre de combustion (10) de turbomachine équipée de plusieurs systèmes d'injection (20, 120) fixés au fond (16) de la chambre, et de plusieurs injecteurs de carburant (30, 130) selon l'une quelconque des revendications 1 à 6, ces injecteurs de carburant (30, 130) étant raccordés aux systèmes d'injection (20, 120).

8. Chambre de combustion (10) de turbomachine selon la revendication 7, dans laquelle chaque système d'injection (120) présente un orifice central, et dans laquelle les premier, deuxième et troisième canaux (134, 144, 174) de chaque injecteur (130) sont réunis en un unique ensemble qui se raccorde au système d'injection (120) à l'intérieur de l'orifice central de ce système (120).

9. Turbomachine comprenant une chambre de combustion (10), selon la revendication 7 ou 8.

## Patentansprüche

1. Treibstoffeinspritzdüse (30, 130) für eine Brennkammer (10) einer Turbomaschine, die eine Einspritzdüsennase (32, 132) aufweist, welche dazu bestimmt ist, an ein am Boden (16) der Brennkammer befestigtes Einspritzsystem (20, 120) angeschlossen zu werden, **dadurch gekennzeichnet, dass** sie umfasst:
- einen ersten Kanal (34, 134) für das Strömen eines Luft/Treibstoff-Vorgemischs (38, 138) zu der Brennkammer, wobei dieser erste Kanal (34, 134) in der Mitte der Einspritzdüsennase über eine Austrittsöffnung (36) des Luft/Treibstoff-Vorgemischs (38, 138) ausmündet,
- einen elektrischen Isolator (40, 140), welcher die Austrittsöffnung (36) des Luft/Treibstoff-Vorgemischs umgibt,
- ein Plasmaerzeugungssystem (41), das der Austrittsöffnung (36) des Luft/Treibstoff-Vorgemischs nachgeordnet ist, um die Zündung und die Verbrennung dieses Luft/Treibstoff-Vorgemischs (38) zu kontrollieren,
- einen zweiten Kanal (44, 144) für das Strömen eines Treibstoffs (46, 146) zu der Brennkammer, wobei dieser zweite Kanal außerhalb des elektrischen Isolators (40, 140) ausmündet, und
- einen dritten Kanal (64, 174) für das Strömen eines Treibstoffs (66, 176) zu der Brennkammer, wobei dieser dritte Kanal (64, 174) außerhalb des zweiten Kanals (44, 144) ausmündet.

2. Treibstoffeinspritzdüse nach Anspruch 1, wobei ein Durchgang (52) zwischen dem ersten Kanal (34, 134) und dem zweiten Kanal (44,144) ausgebildet ist, so dass der Treibstoff (46, 146) des zweiten Kanals (44, 144) verwendet wird, um das Luft/Treibstoff-Vorgemisch (38, 138) des ersten Kanals (34, 134) herzustellen.

3. Treibstoffeinspritzdüse nach Anspruch 1 oder 2, wobei das Plasmaerzeugungssystem wenigstens zwei Elektroden (42a, 42b) umfasst, wobei das Plasma durch eine zwischen diesen beiden Elektroden erzeugte elektrische Entladung erzeugt wird.

4. Treibstoffeinspritzdüse nach einem der Ansprüche 1 bis 3, wobei das Plasmaerzeugungssystem umfasst: eine an dem elektrischen Isolator (40) befestigte erste Elektrode (42a) ohne Kontakt mit dem Rest der Einspritzdüse; ein elektrisches Kabel (43), das innerhalb des Isolators (40) verläuft und an die erste Elektrode (42a) angeschlossen ist, und eine zweite Elektrode (42b) in Kontakt mit einem aus einem elektrisch leitenden Material ausgebildeten Teil der Einspritzdüse.

5. Treibstoffeinspritzdüse nach einem der Ansprüche 1 bis 4, wobei der erste Kanal (34, 134) allgemein rohrförmig ist und an seinem stromaufwärtigen Ende eine Lufteintrittsöffnung (39) aufweist, durch welche die Luft eintritt, die verwendet wird, um das Luft/Treibstofif-Vorgemisch (38, 138) herzustellen.

6. Treibstofifeinspritzdüse nach einem der Ansprüche 1 bis 5, wobei der erste, der zweite und der dritte Kanal (34, 44, 64; 134, 144, 174) zu einer einzigen Anordnung zusammengefügt sind.

7. Brennkammer (10) einer Turbomaschine, die mit mehreren am Boden (16) der Kammer befestigten Einspritzsystemen (20, 120) und mit mehreren Treibstofifeinspritzdüsen (30, 130) nach einem der Ansprüche 1 bis 6 ausgestattet ist, wobei diese Treibstoffeinspritzdüsen (30, 130) an die Einspritzsysteme (20, 120) angeschlossen sind.

8. Brennkammer (10) einer Turbomaschine nach Anspruch 7, wobei jedes Einspritzsystem (120) eine mittlere Öffnung aufweist und wobei der erste, der zweite und der dritte Kanal (134, 144, 174) einer jeden Einspritzdüse (130) zu einer einzigen Anordnung, die an das Einspritzsystem (120) innerhalb der mittleren Öffnung dieses Systems (120) angeschlossen ist, zusammengefügt sind.

9. Turbomaschine, die eine Brennkammer (10) nach Anspruch 7 oder 8 umfasst.

## Claims

1. A fuel injector (30, 130) for a turbomachine combustion chamber (10), the injector presenting an injector nose (32, 132) for connection to an injection system (20, 120) fastened to the end wall (16) of said combustion chamber, the fuel injector being **characterized in that** it comprises:
• a first channel (34, 134) for passing a flow of an air/fuel pre-mixture (38, 138) towards the combustion chamber, the first channel (34, 134) opening out into the center of the injector nose via an outlet opening (36) for the air/fuel pre-mixture (38, 138);
• an electrical insulator (40, 140) surrounding said outlet opening (36) for the air/fuel pre-mixture;
• a plasma generator system (41) disposed downstream from said outlet opening (36) for the air/fuel pre-mixture in order to control ignition and combustion of the air/fuel pre-mixture (38);
• a second channel (44, 144) for passing a flow of fuel (46, 146) towards the combustion chamber, the second channel opening out outside said electrical insulation (40, 140); and
• a third channel (64, 174) for passing a flow of fuel (66, 176) towards the combustion chamber, this third channel (64, 174) opening out outside the second channel (44, 144).

2. A fuel injector according to claim 1, in which a passage (52) is provided between the first channel (34, 134) and the second channel (44, 144) so that fuel (46, 146) from the second channel (44, 144) is used for making the air/fuel pre-mixture (38, 138) of the first channel (34, 134).

3. A fuel injector according to claim 1 or claim 2, in which the plasma generator system comprises at least two electrodes (42a, 42b), the plasma being generated by an electric discharge created between the two electrodes.

4. A fuel injector according to any one of claims 1 to 3, in which the plasma generator system comprises: a first electrode (42a) fastened on said electrical insulation (40) without making contact with the remainder of the injector; an electric wire (43) passing inside said insulation (40) and connected to the first electrode (42a); and a second electrode (42b) in contact with a portion of the injector that is made of an electrically-conductive material.

5. A fuel injector according to any one of claims 1 to 4, in which the first channel (34, 134) is generally tubular in shape and presents, at its upstream end, an air inlet opening (39) through which enters air used to make the air/fuel pre-mixture (38, 138).

6. A fuel injector according to any one of claims 1 to 5, in which first, second and third channels (34, 44, 64; 134, 144, 174) are combined in a single assembly.

7. A turbomachine combustion chamber (10) fitted with a plurality of injection systems (20, 120) fastened to the end wall (16) of the chamber, and a plurality of fuel injectors (30, 130) according to any one of claims 1 to 6, the fuel injectors (30, 130) being connected to the injection systems (20, 120).

8. A turbomachine combustion chamber (10) according to claim 7, in which each injection system (120) presents a central orifice, and in which first, second and third channels (134, 144, 174) of each injector (130) are united in a single assembly that is connected to the injection system (120) inside the central orifice of the system (120).

9. A turbomachine comprising a combustion chamber (10) according to claim 7 or 8.
